# EUROPEAN PATENT SPECIFICATION

(11) **EP 2 643 670 B1**
(45) Date of publication and mention of the grant of the patent: **03.01.2018**
(21) Application number: 11843484.4
(22) Date of filing: 10.11.2011
(51) Int. Cl.: G01L 5/00, B66B 5/14

(54) **ARRANGEMENT AND METHOD FOR TESTING THE LOAD-SUPPORTING CAPABILITY OF A LIFTING FIXTURE**
ANORDNUNG UND VERFAHREN ZUM TESTEN DER LASTENTRAGEKAPAZITÄT EINER HEBEARMATUR
AGENCEMENT ET PROCÉDÉ POUR TESTER LA CAPACITÉ À SUPPORTER UNE CHARGE D'UN APPAREIL DE LEVAGE

(30) Priority: 24.11.2010 FI 20106237
(43) Date of publication of application: 02.10.2013
(73) Proprietor: KONE Corporation, 00330 Helsinki (FI)
(72) Inventor: TAAVELA, Juha, FI-06900 LAMMI (FI); KARVONEN, Aki, FI-12540 Launonen (FI); MERTALA, Antti, FI-05830 Hyvinkää (FI); AHONIEMI, Jarmo, FI-05400 Jokela (FI)
(74) Representative: Glück Kritzenberger Patentanwälte PartGmbB
(86) International application number: PCT/FI2011/000047
(87) International publication number: WO 2012/069691

(56) References cited:
- EP-A1- 2 192 395
- EP-A1- 2 192 395
- DE-A1- 3 030 770
- DE-A1- 3 030 770
- DE-A1- 4 443 343
- US-A- 4 753 115
- US-A- 4 753 115
- US-A- 5 479 830
- US-A- 5 479 830

## Description

The present invention relates to an arrangement as defined in the preamble of claim 1 and to a method as defined in the preamble of claim 9 for testing the load-supporting capability of a lifting fixture.

The DE 30 30 770 A1 discloses an arrangement for testing a suspending fixture according to the preamble of claim 1.

The arrangement of the invention is particularly well applicable for the testing of temporary lifting fixture needed at elevator installation sites. It is often necessary at elevator installation sites to move people vertically even when the elevators are not yet ready. For these purposes, various hoists and hoisting devices are used, which are suspended from a lifting fixture, such as a lifting sling, ring or hook, anchored in a fixed structure in the building. The lifting fixture may be anchored e.g. in the ceiling of an elevator shaft being built or already finished, in an intermediate floor of the building, in a wall or even in the floor, in which case the hoisting rope or chain is passed back up from below.

Since the lifting fixtures are used to support human loads, it is necessary to test the load-supporting capability of the lifting fixture by reliable methods. In a prior-art method, the load-supporting capability of a lifting fixture is tested using a separate testing device provided with an indicator of load-supporting capability, which device is fixed to the lifting fixture to be tested and which can be used to apply to the lifting fixture a desired pulling force that the lifting fixture is required to withstand in order to pass the test. A problem is that the device employs a force indicator, which is expensive and which has to be calibrated from time to time. If the device is incorrectly calibrated, this may result in hazardous situations endangering human lives. In addition, the device is prone to breaking down and it is also relatively small, so it is liable to be forgotten somewhere and it can also be easily stolen, and acquiring a new one is expensive.

In prior art, the load-supporting capability of lifting fix lifting fixtures is also tested at elevator installation sites by attaching to the lifting fixture a testing element, generally made of metal and also called a pulling fuse, and applying a pulling force to the element until it breaks. Pulling fuses are generally acquired by subcontracting, and the manufacturer gives for each pulling fuse an exact break load, e.g. 1000 kg, 2000 kg etc., which is thus known. Consequently, when a pulling fuse suspended from a lifting fixture, such as a lifting sling, is subjected to a tensile force until it breaks, this means that the lifting fixture in question, i.e. in this case the lifting sling, can support at least the load inscribed on the pulling fuse. According to prior art, the testing can be implemented e.g. by connecting a lifting tackle or equivalent between the lifting fixture and another fixed point at a distance from the lifting fixture and applying a pull by means of the lifting tackle until the fuse breaks.

However, a problem with this procedure is a laborious arrangement with a high spatial requirement, because it may be difficult to find a strong enough point of counterforce at a desired distance. Also, the point of counterforce must be suited for the attachment of a tackle hook or equivalent. Another problem encountered is that it is sometimes necessary to apply very great forces to the lifting fixture if their intended use so requires. In such cases, prior-art solutions have proved to be large in size and difficult to move as well as expensive.

The object of the present invention is to eliminate some of the above-mentioned drawbacks and to achieve a simple, advantageous and reliable arrangement and method for testing the load-supporting capability of a lifting fixture. The invention also aims at achieving a simple, advantageous and reliable arrangement and method for testing the load-supporting capability of different other supporting and anchoring fixtures, and especially also for testing the load-supporting capability of lifting, supporting and anchoring fixtures used in conjunction with elevator installation, maintenance and repair work. The arrangement of the invention is characterized by what is disclosed in the characterization part of claim 1. Similarly, the method of the invention is characterized by what is disclosed in the characterization part of claim 9. Other embodiments of the invention are characterized by what is disclosed in the other claims.

Inventive embodiments are also presented in the description part of the present application. The inventive content of the application can also be defined in other ways than is done in the claims below. The inventive content may also consist of several separate inventions, particularly if the invention is considered in the light of explicit or implicit sub-tasks or with reference to advantages or sets of advantages achieved. Therefore, some of the definitions contained in the claims below may be superfluous from the point of view separate inventive ideas. Correspondingly, the various details presented in connection with each embodiment example of the invention can be used in other embodiment examples as well. It may further be stated that at least some of the sub-claims can at least in appropriate situations be regarded as being inventive in themselves.

The solution of the invention has the advantage that the required equipment is of a suitable size and easy to use and can be mounted near the lifting fixture to be tested. Therefore, no large space is required. Another advantage is that the counterforce is taken from the wall, floor or ceiling containing the lifting fixture, so there is no need for a separate point of counterforce. A further advantage is that a lever means is used which makes it easy to produce the force required for the testing without any big lifting tackles. Yet another advantage is that the force measurement is independent of the method of producing the force itself, and as the solution is of a mechanical type, it is highly disturbance-free and the testing apparatus need not be calibrated, and consequently no hazards due to incorrect calibration or neglect of calibration can arise.

The arrangement of the invention for testing a suspending fixture, such as a lifting fixture for an elevator, anchored in a fixed structure, comprises a pulling device and, placed between the pulling device and the suspending fixture, testing means for indicating the force between the pulling device and the suspending fixture. The pulling device comprises a lever-like main body, which is arranged to bear on said fixed structure by a first point A via a force element producing a pushing force on point A and turnably by a second point B, and the aforesaid testing means are fastened to a third point C on the main body, said point C being located between the first point A and the second point B. In particular, the pushing device is arranged to push point A in a direction away from the fixed structure by taking a counterforce for the pushing action from the fixed structure, thus turning the main body about point B and causing point C to move (away from the lifting fixture). This movement of point C produces a tensile stress on the testing means and via these a tensile stress on the lifting fixture.

The method of the invention for testing a suspending fixture, such as an elevator lifting fixture, anchored in a fixed structure, involves the use of a pulling device and testing means sustaining a known load for indicating the force acting between the pulling device and the suspending fixture. The pulling device is placed near the suspending fixture to be tested, and it is arranged to bear by its first end on a first side of the suspending fixture and by its second end on a second side of the suspending fixture, and the required counterforce is taken from the fixed structure, such as the wall, floor or ceiling, containing the suspending fixture.

In the following, the invention will be described in more detail by referring to an embodiment example and the attached drawings, wherein
- Fig. 1: presents a side view of a testing device used in the arrangement of the invention before the testing of the lifting fixture in the ceiling has been carried out,
- Fig. 2: presents a top view of a testing device used in the arrangement of the invention,
- Fig. 3: presents an end view of a testing device used in the arrangement of the invention,
- Fig. 4: presents a side view of a testing element, i.e. a pulling fuse, used in the arrangement of the invention,
- Fig. 5: presents a side view of a testing device used in the arrangement of the invention, ready for the carrying out of the testing of a lifting fixture in the ceiling, and
- Fig. 6: presents the testing device according to Fig. 5 as sectioned along section line VI-VI in Fig. 5.

Although the invention is described by referring to an embodiment example of an arrangement and method for the testing of lifting, suspending and anchorage fixtures used in conjunction with elevators, the arrangement and method of the invention can also be utilized in connection with other applications besides elevators.

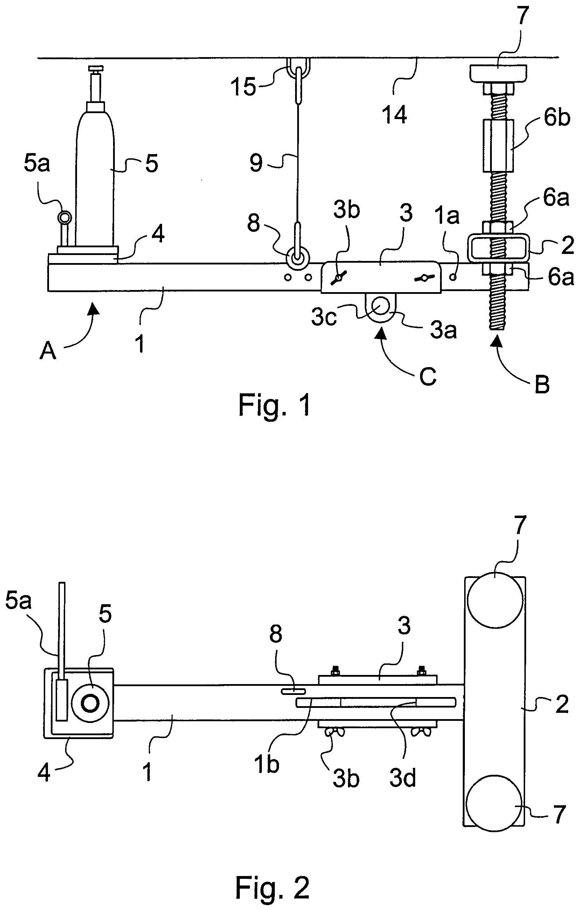

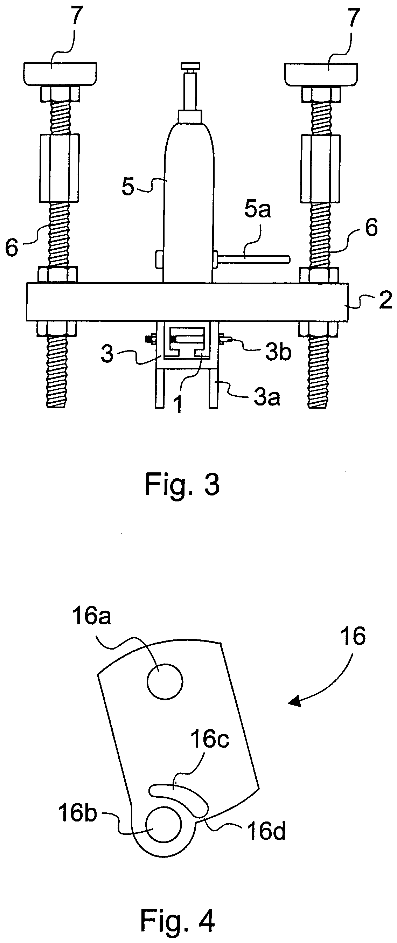

Figs. 1-3 present a pulling device used as a testing device in the arrangement and method of the invention, before the actual testing of a lifting fixture 15, such as a hoisting sling, ring or hook placed in the ceiling 14. Fig. 1 shows the device as seen from one side, Fig. 2 as seen from above and Fig. 3 as seen from one end.

The arrangement of the invention comprises a pulling device used as a testing device, which has an elongated beam-like main body 1, which in cross-section has the shape of e.g. a U-beam or equivalent. Attached to the first end of the main body 1, at point A on top of a support plate 4, is a force element 5, such as a hydraulic jack provided with an operating rod 5a and serving as a pushing device, whose direction of movement is substantially perpendicular to the longitudinal direction of the main body 1. For example, when a lifting fixture 15 in the ceiling 14 is to be tested, the direction of movement of the hydraulic jack 5 during operation of the hydraulic jack is upwards from the main body 1, i.e. towards the ceiling 14. The hydraulic jack 5 may be fixedly or detachably mounted on the main body 1.

Placed at the second end of the main body 1 is likewise an elongated beam-like auxiliary body 2, which in cross-section has the shape of e.g. a U-beam, rectangular tube or equivalent. The auxiliary body 2 is in a substantially perpendicular position relative to the main body 1. Placed at each end of the auxiliary body 2 is a strut 6 oriented parallel to the hydraulic jack 5 and positioned at point B relative to the longitudinal direction of the main body 1. As the struts 6 are thus placed at a horizontal distance from each other, the testing device will remain in a stable position without tending to tilt sideways. Placed at the free end of the struts 6, i.e. at the upper end in the case of ceiling application, are thrust transmitting elements 7, which bear against a counter-thrust surface near the lifting fixture 15, such as the ceiling 14 as in the case of the present example. The thrust transmitting elements 7 are preferably connected to the upper ends of the struts 6 via articulated joints, so the struts 6 meet the ceiling 14 in a turnable manner. The articulated joints could just as well be placed at the lower ends of the struts 6, e.g. between the main body 1 and the struts 6. To allow adjustment of the length of the struts 6, the struts 6 are provided with adjusting elements, such as threads and adjusting nuts 6a, by means of which the distance of the thrust transmitting elements 7 at the ends of the struts 6 from the auxiliary body 2 can be adjusted, whereby the distance of the second end of the main body 1 from the ceiling 14 is adjusted at the same time.

In addition, a supporting element 9 is attached to the main body 1 via a suitable fastening element, such as a fastening ring 8. The supporting element 9 is preferably a thin wire rope or chain and it is fastened by its first end to the fastening ring 8 and by its second end to the lifting fixture 15 to be tested or to a suitable fastening point near the lifting fixture 15 functioning as an anchorage point. The supporting element 9 facilitates the task of mounting the device in place at the initial stage of the testing process and prevents the device from falling down after the fuse has broken e.g. during ceiling testing.

The lever-like main body 1 forms a lever arm with its fulcrum C located between the first end and the second end of the main body 1, i.e. on the main body 1 between the jack 5 and the struts 6, preferably closer to the struts 6 than to the jack 5. The position of the fulcrum C can preferably be adjusted when necessary, for which purpose the device comprises means 3, fitted in conjunction with the main body 1, such as a carriage movable in the longitudinal direction of the main body 1, which, for the time required for the testing, is fastened to the main body 1 by means of one or more fastening screws 3b at a position considered appropriate. The position of the carriage 3 can be adjusted by the aid of adjusting holes 1a provided in the sides of the main body, into which the fastening screws 3b can be inserted. The carriage 3 has on its underside two fastening lugs 3a provided with a hole 3c, in which holes the testing means, i.e. the testing element 16, which is also referred to by the designation pulling fuse 16, which is used for the testing of the lifting fixture, can be locked by means of e.g. a bolt or equivalent. The center of the holes 3c constitutes the position of the aforesaid fulcrum. The fastening lugs 3a and the holes 3c in them are not necessarily needed at all, because, by virtue of the structure of the pulling fuse, the bolt or pin fastened in the hole in the fuse 16 will remain attached to the fuse even after the fuse has been broken apart.

The underside of the carriage 3 is provided with a slot 3d extending in the longitudinal direction of the carriage, and the main body 1 has a corresponding slot 1b extending longitudinally in the range of motion of the carriage 3, through which slots the testing element or fuse 16 is inserted for the testing of the lifting fixture 15. The fuse 16 is described in more detail in connection with Fig. 4.

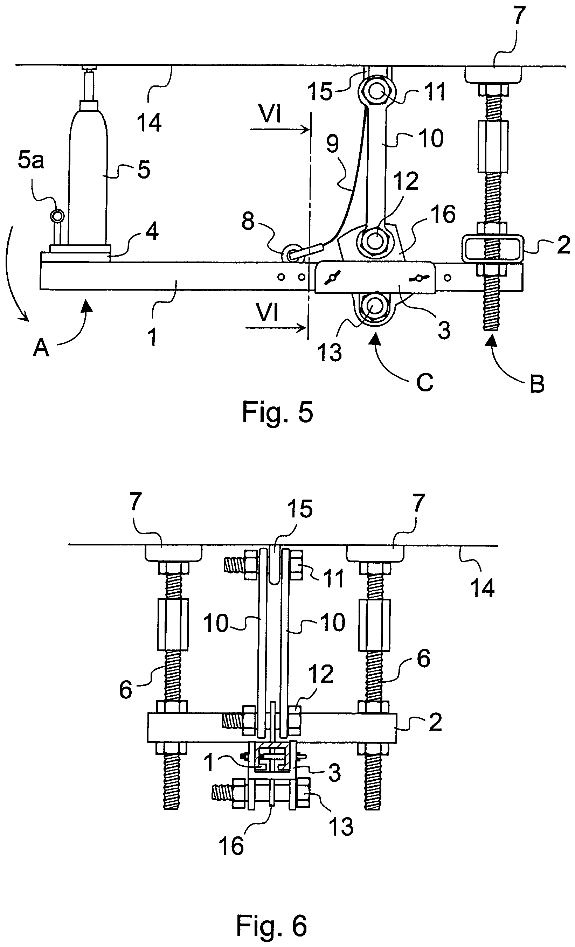

Fig. 4 shows a testing element 16 or fuse used in the arrangement and method of the invention. The fuse 16 is e.g. a platelike metal element with different holes in it. Holes 16a and 16b are used for fastening the fuse 16 so that it is subjected to a tensile stress. The fuse is fastened to the lifting fixture 15 e.g. by hole 16a by using a suitable suspending element, e.g. chain shackles or by means of suspending elements 10 as described below in connection with Figs. 5 and 6. Similarly, the fuse 16 is locked to the testing device by hole 1b using e.g. a bolt or pin. The dimensions of hole 16c have been so chosen that there remains between the hole 16c and the edge of the fuse 16 a neck 16d which is thinner than the rest of the structure and which is where the fuse 16 breaks when the tensile force exceeds the specified load supporting capacity of the fuse. Since the breakage always occurs in the area of the neck 16d, the bolts in holes 16a and 16b remain in place even after the breakage, so the fastening lugs 3a in the carriage 3 are not necessarily needed at all, as stated above.

Figs. 5 and 6 represent a pulling device used as a testing device in the arrangement and method of the invention, ready for the execution of the testing of a lifting fixture 15 mounted in the ceiling 14. Fig. 5 presents the testing device in side view, and in Fig. 6 the testing device is shown as a section taken along the section line VI-VI in Fig. 5 and seen in the direction of the arrows. For the sake of clarity, the supporting element 9 has been omitted from Fig. 6, although part of it would be visible in the sectional view.

For the testing of the load-supporting capability of the lifting fixture 15 in the ceiling 14, the testing arrangement comprises a testing element 16 or fuse which is fastened to the testing device and which will break at an intended point 16d when subjected to a predetermined tensile force, or in this case load. The fuse 16 is inserted vertically through the main body 1 and carriage 3 via the slots 1b and 3b in them in such manner that the first hole 16a of the fuse remains above the main body 1 and the second hole 16b remains below the main body 1 and carriage 3. The fuse 16 is further suspended by its first hole 16a from the lifting fixture 15, using appropriate suspending elements 10, shackles or similar suspending elements. The fastening is locked at each end by means of e.g. bolts 11, 12 or pins. Likewise, the fuse 16 is locked by hole 16b by means of a bolt 3 or pin to the main body 1 of the testing device so as to be movable along with it, said bolt 13 bearing against the lower surface of the carriage 3 and via it against the lower surface of the main body 1 at point C.

In the situation of Fig. 5, when the length of the jack 5 is increased, the first end of the main body 1 at point A will move downwards and, due to the leverage thus produced, the fuse 16 is subjected at point C to an increased tension, which will easily break the fuse 16 at the predetermined level of tension. More generally speaking, the arrangement comprises a force element 5 producing a thrust force to move point A at the first end of the main body 1 in a direction away from a fixed structure 14, such as a ceiling, floor or wall, this movement being intended to turn the main body 1 relative to point B at the second end of the main body 1 and at the same time also to turn point C located between points A and B relative to point B so as to create a tensile stress on the testing means 16. The supporting element 9 ensures that the device cannot fall down during the testing.

By the method of the invention, the testing of the load-supporting capability of the lifting fixture 15 is performed e.g. in the following manner. The pulling device used as a testing device is placed near the lifting fixture 15 to be tested, in such manner that the pulling device is arranged to bear by its first end on a first side of the lifting fixture 15 and by its second end on a second side of the lifting fixture 15, and the required counterforce is taken from the wall, floor or ceiling 14 containing the lifting fixture 15. Thus, the bearing forces both at the first end of the pulling device and at the second end of the pulling device are applied substantially to the same wall, floor or ceiling 14 in which the lifting fixture 15 to be tested is mounted. The testing element 16 is fastened by its first end to the lifting fixture 15 to be tested and by its second end to the main body 1 of the pulling device so that it is supported by the main body 1 of the pulling device and will move along with the movement of the main body 1 of the pulling device. During the testing operation, the distance of the first end of the main body 1 of the pulling device from the counter-thrust surface for the first end is increased until the testing element 16 breaks, indicating that the required test force has been exceeded.

It is obvious to a person skilled in the art that the invention is not exclusively restricted to the above-described example, but that it may vary within the scope of the claims presented below. Thus, e.g. the pulling device used as a testing device may have a structure differing from the above description.
It is further obvious to the person skilled in the art that the fuse may differ from that described above. It may consist of e.g. a metal sling whose breaking point is known.

## Claims

1. An arrangement for testing a suspending fixture (15) of an elevator anchored in a fixed structure (14), said arrangement comprising a pulling device and, placed between the pulling device and the suspending fixture (15), testing means (16) for indicating the force between the pulling device and the suspending fixture (15), **characterized in that** the pulling device comprises a lever-like main body (1), which main body (1) is arranged to bear on said fixed structure (14) by a first point (A) via a force element producing a pushing force on point (A) and turnably by a second point (B), and that the aforesaid testing means (16) are mounted at a third point (C) on the main body, said point (C) being located between the first point (A) and the second point (B).

2. An arrangement according to claim 1, **characterized in that** the aforesaid third point (C) is located closer to the aforesaid second point (B) than to the aforesaid first point (A).

3. An arrangement according to claim 1 or 2, **characterized in that** the arrangement comprises means (1a, 3, 3b) for adjusting the position of the aforesaid third point (C) between the first point (A) on the main body (1) and the second point (B) on the main body (1).

4. An arrangement according to claim 1, 2 or 3, **characterized in that** the force element (5) at the first point (A) on the main body (1) is a hydraulic thrust device.

5. An arrangement according to any one of the preceding claims, **characterized in that** the struts (6) at the second point (B) on the main body (1) are elements capable of withstanding compressive force.

6. An arrangement according to any one of the preceding claims, **characterized in that** the pulling device comprises elements (6, 6a) for adjusting the distance of the second point (B) on the main body (1) relative to the fixed structure (14).

7. An arrangement according to any one of the preceding claims, **characterized in that** the arrangement comprises releasable and closable suspending elements (10) between the main body (1) of the pulling device and the aforesaid suspending fixture (15), for suspending the testing means (16) from the suspending fixture (15), said suspending elements (10) being e.g. chain shackles suited for the purpose.

8. An arrangement according to any one of the preceding claims, **characterized in that** the aforesaid testing means (16) for indicating the force between the pulling device and the suspending fixture (15) comprises a region (16d) which is weaker than the rest of the structure of the testing means (16) and which has a predetermined known breakage strength.

9. A method for testing, by using the arrangement of claim 1, a suspending fixture (15) of an elevator anchored in a fixed structure (14), in which method are used a pulling device and, placed between the pulling device and the suspending fixture (15), testing means (16) for indicating the force between the pulling device and the suspending fixture (15), **characterized in that** the pulling device is placed near the suspending fixture (15) to be tested, and arranged to bear by its first end on a first side of the suspending fixture (15) and by its second end on a second side of the suspending fixture (15), and that the required counterforce is taken from the fixed structure (14), such as the wall, floor or ceiling, containing the suspending fixture (15).

10. A method according to claim 9, **characterized in that** the testing means (16) is fastened by its first end (16a) to the suspending fixture (15) to be tested and by its second end (16b) to the main body (1) of the pulling device so as to be supported by it and to be movable with the movement of the main body (1) of the pulling device.

11. A method according to claim 9 or 10, **characterized in that**, in conjunction with the testing operation, the distance of the first end of the main body (1) of the pulling device from a counter-thrust surface in the fixed structure (14) is increased, thereby also increasing the distance of the second end (16b) of the testing means (16) from the counter-thrust surface in the fixed structure (14), until the known breaking region (16d) of the testing means (16) breaks, indicating that the required test force has been exceeded.

## Patentansprüche

1. Anordnung zum Testen einer Aufhängevorrichtung (15) eines Aufzugs, die in einer festen Struktur (14) verankert ist, wobei die Anordnung eine Zugvorrichtung umfasst und, zwischen der Zugvorrichtung und der Aufhängevorrichtung (15) positioniert, Testmittel (16) zum Angeben der Kraft zwischen der Zugvorrichtung und der Aufhängevorrichtung (15), **dadurch gekennzeichnet, dass** die Zugvorrichtung einen hebelartigen Hauptkörper (1) umfasst, wobei der Hauptkörper (1) zum Tragen auf der festen Struktur (14) durch einen ersten Punkt (A) über ein Kraftelement, das eine Druckkraft auf Punkt (A) erzeugt, und drehbar durch einen zweiten Punkt (B) angeordnet ist, und dass die vorgenannten Testmittel (16) an einem dritten Punkt (C) des Hauptkörpers befestigt sind, wobei Punkt (C) zwischen dem ersten Punkt (A) und dem zweiten Punkt (B) positioniert ist.

2. Anordnung nach Anspruch 1, **dadurch gekennzeichnet, dass** der vorgenannte dritte Punkt (C) näher an dem vorgenannten Punkt (B) positioniert ist als an dem vorgenannten ersten Punkt (A).

3. Anordnung nach Anspruch 1 oder 2, **dadurch gekennzeichnet, dass** die Anordnung Mittel (1a, 3, 3b) zum Einstellen der Position des vorgenannten dritten Punkts (C) zwischen dem ersten Punkt (A) auf dem Hauptkörper (1) und dem zweiten Punkt (B) auf dem Hauptkörper (1) umfasst.

4. Anordnung nach Anspruch 1, 2 oder 3, **dadurch gekennzeichnet, dass** das Kraftelement (5) an dem ersten Punkt (A) des Hauptkörpers (1) eine hydrostatische Druckvorrichtung ist.

5. Anordnung nach einem der vorstehenden Ansprüche, **dadurch gekennzeichnet, dass** die Streben (6) an dem zweiten Punkt (B) auf dem Hauptkörper (1) Elemente sind, die die Fähigkeit haben, der Druckkraft zu widerstehen.

6. Anordnung nach einem der vorstehenden Ansprüche, **dadurch gekennzeichnet, dass** die Zugvorrichtung Elemente (6, 6a) zum Einstellen der Distanz des zweiten Punkts (B) auf dem Hauptkörper (1) relativ zu der festen Struktur (14) umfasst.

7. Anordnung nach einem der vorstehenden Ansprüche, **dadurch gekennzeichnet, dass** die Anordnung lösbare und schließbare Aufhängungselemente (10) zwischen dem Hauptkörper (1) der Zugvorrichtung und der vorgenannten Aufhängevorrichtung (15) zum Aufhängen der Testmittel (16) von der Aufhängevorrichtung (15) umfasst, wobei die Aufhängungselemente (10) beispielsweise für den Zweck geeignete Kettenbügel umfassen.

8. Anordnung nach einem der vorstehenden Ansprüche, **dadurch gekennzeichnet, dass** die vorgenannten Testmittel (16) zum Angeben der Kraft zwischen der Zugvorrichtung und der Aufhängevorrichtung (15) einen Bereich (16d) umfassen, der schwächer ist als der Rest der Struktur der Testmittel (16), und eine vorbestimmte, bekannte Bruchfestigkeit aufweist.

9. Verfahren zum Testen, unter Verwendung der Anordnung nach Anspruch 1, einer Aufhängevorrichtung (15) einer Aufzugshebung, die in einer festen Struktur (14) verankert ist, wobei in dem Verfahren eine Zugvorrichtung und, zwischen der Zugvorrichtung und der Aufhängevorrichtung (15) positioniert, Testmittel (16) zum Angeben der Kraft zwischen der Zugvorrichtung und der Aufhängevorrichtung (15) verwendet werden, **dadurch gekennzeichnet, dass** die Zugvorrichtung in der Nähe der zu testenden Aufhängevorrichtung (15) positioniert ist, und angeordnet ist, um mit ihrem ersten Ende einer ersten Seite der Aufhängevorrichtung (15) und mit ihrem zweiten Ende einer zweiten Seite der Aufhängevorrichtung (15) zu tragen, und dass die erforderliche Gegenkraft aus der festen Struktur (14) erhalten wird, wie etwa der Wand, dem Boden oder der Decke, die bzw. der die Aufhängevorrichtung (15) enthält.

10. Verfahren nach Anspruch 9, **dadurch gekennzeichnet, dass** die Testmittel (16) an ihrem ersten Ende (16a) an der zu testenden Aufhängevorrichtung (15) und an ihrem zweiten Ende (16b) an dem Hauptkörper (1) der Zugvorrichtung befestigt sind, so dass sie davon gestützt werden und mit der Bewegung des Hauptkörpers (1) der Zugvorrichtung bewegbar sind.

11. Verfahren nach Anspruch 9 oder 10, **dadurch gekennzeichnet, dass**, in Verbindung mit dem Testbetrieb, die Distanz des ersten Endes des Hauptkörpers (1) der Zugvorrichtung von einer Gegendruckfläche in der festen Struktur (14) erhöht wird, wodurch auch die Distanz des zweiten Endes (16b) der Testmittel (16) von der Gegendruckfläche in der festen Struktur (14) erhöht wird, bis der bekannte Brechbereich (16d) der Testmittel (16) bricht, was angibt, dass die erforderliche Testkraft überschritten wurde.

## Revendications

1. Agencement pour tester un dispositif de suspension (15) d'un ascenseur, ancré dans une structure fixe (14), ledit agencement comprenant un dispositif de traction et, placés entre le dispositif de traction et le dispositif de suspension (15), des moyens de test (16) pour indiquer la force entre le dispositif de traction et le dispositif de suspension (15), **caractérisé en ce que** le dispositif de traction comprend un corps principal de type levier (1), ledit corps principal (1) étant agencé pour être supporté sur ladite structure fixe (14) par un premier point (A) par l'intermédiaire d'un élément de force produisant une force de poussée sur le point (A) et pouvant tourner par un deuxième point (B), et **en ce que** lesdits moyens de test (16) sont montés au niveau d'un troisième point (C) sur le corps principal, ledit point (C) étant situé entre le premier point (A) et le deuxième point (B).

2. Agencement selon la revendication 1, **caractérisé en ce que** ledit troisième point (C) est situé plus proche dudit deuxième point (B) que dudit premier point (A).

3. Agencement selon la revendication 1 ou 2, **caractérisé en ce que** l'agencement comprend des moyens (1a, 3, 3b) pour régler la position dudit troisième point (C) entre le premier point (A) sur le corps principal (1) et le deuxième point (B) sur le corps principal (1).

4. Agencement selon la revendication 1, 2 ou 3, **caractérisé en ce que** l'élément de force (5) au niveau du premier point (A) sur le corps principal (1) est un moyen de poussée hydraulique.

5. Agencement selon une quelconque des revendications précédentes, **caractérisé en ce que** les béquilles (6) au niveau du deuxième point (B) sur le corps principal (1) sont des éléments capables de supporter une force de compression.

6. Agencement selon une quelconque des revendications précédentes, **caractérisé en ce que** le dispositif de traction comprend des éléments (6, 6a) pour régler la distance du deuxième point (B) sur le corps principal (1) par rapport à la structure fixe (14).

7. Agencement selon une quelconque des revendications précédentes, **caractérisé en ce que** l'agencement comprend des éléments de suspension enlevables et fermables (10) entre le corps principal (1) du dispositif de traction et ledit dispositif de suspension (15), pour suspendre les moyens de test (16) par rapport au le dispositif de suspension (15), lesdits éléments de suspension (10) étant par exemple des manilles de chaîne adaptées à cet effet.

8. Agencement selon une quelconque des revendications précédentes, **caractérisé en ce que** lesdits moyens de test (16) pour indiquer la force entre le dispositif de traction et le dispositif de suspension (15) comprend une région (16d) qui est plus faible que le reste de la structure des moyens de test (16) et qui a une résistance à la rupture connue prédéterminée.

9. Procédé pour tester, en utilisant l'agencement selon la revendication 1, un le dispositif de suspension (15) d'un ascenseur ancré dans une structure fixe (14), dans lequel procédé sont utilisés un dispositif de traction et, placés entre le dispositif de traction et le dispositif de suspension (15), des moyens de test (16) pour indiquer la force entre le dispositif de traction et le dispositif de suspension (15), **caractérisé en ce que** le dispositif de traction est placé à côté du dispositif de suspension (15) pour être testé, et agencé pour être supporté par sa première extrémité sur un premier côté du dispositif de suspension (15) et par sa seconde extrémité sur un second côté du dispositif de suspension (15), et **en ce que** la contre-force requise est prise à partir de la structure fixe (14), telle que la paroi, le plancher ou le plafond, contenant le dispositif de suspension (15).

10. Procédé selon la revendication 9, **caractérisé en ce que** le moyen de test (16) est fixé par sa première extrémité (16a) au dispositif de suspension (15) pour être testé et par sa seconde extrémité (16b) au corps principal (1) du dispositif de traction de manière à être supporté par celui-ci et être déplaçable avec le déplacement du corps principal (1) du dispositif de traction.

11. Procédé selon la revendication 9 ou 10, **caractérisé en ce que**, en liaison avec l'opération de test, la distance de la première extrémité du corps principal (1) du dispositif de traction par rapport à une surface de contre-poussée dans la structure fixe (14) est augmentée, augmentant alors également la distance de la seconde extrémité (16b) des moyens de test (16) par rapport à la surface de contre-poussée dans la structure fixe (14), jusqu'à ce que la région de rupture connue (16d) des moyens de test (16) se rompt, indiquant que la force de test requise a été dépassée.
